(19) **Europäisches Patentamt / European Patent Office / Office européen des brevets**

(11) **EP 3 834 725 B1**

(12) **EUROPEAN PATENT SPECIFICATION**

(45) Date of publication and mention
of the grant of the patent:
**19.03.2025 Bulletin 2025/12**

(21) Application number: **19383093.2**

(22) Date of filing: **11.12.2019**

(51) International Patent Classification (IPC):
*A61B 5/16* (2006.01)       *G06F 18/2433* (2023.01)
*G06F 18/25* (2023.01)       *G06F 40/216* (2020.01)

(52) Cooperative Patent Classification (CPC):
**G06F 18/2433; G06F 18/251;** G06F 40/216;
G06F 2218/12

(54) **METHOD AND SYSTEM FOR DETECTING HUMAN ABNORMAL BEHAVIOUR BY USING DATA FROM USER'S PORTABLE DEVICES**

VERFAHREN UND SYSTEM ZUR ERKENNUNG VON MENSCHLICHEM ABNORMALEM VERHALTEN UNTER VERWENDUNG VON DATEN VON TRAGBAREN VORRICHTUNGEN EINES BENUTZERS

PROCÉDÉ ET SYSTÈME DE DETECTION D'UN COMPORTEMENT HUMAIN ANORMAL EN UTILISANT DES DONNÉES PROVENANT DE DISPOSITIFS PORTABLES DE L'UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.06.2021 Bulletin 2021/24**

(73) Proprietor: **Koa Health Digital Solutions S.L.U.**
**08018 Barcelona (ES)**

(72) Inventors:
• **BUDA, Teodora, Sandra**
  **28050 MADRID (ES)**
• **ESTELLA, Inaki**
  **28050 MADRID (ES)**
• **KHWAJA, Mohammed**
  **28050 MADRID (ES)**
• **GARRIGA CALLEJA, Roger**
  **28050 MADRID (ES)**
• **MATIC, Aleksandar**
  **28050 MADRID (ES)**

(74) Representative: **Carlos Hernando, Borja**
**Garrigues IP, S.L.P.**
**Hermosilla, 3**
**28001 Madrid (ES)**

(56) References cited:
**US-A1- 2019 246 968**

• **TÂM HUYNH ET AL: "Discovery of activity patterns using topic models", 10TH INTERNATIONAL CONFERENCE ON UBIQUITOUS COMPUTING (UBICOMP 2008); SEOUL, KOREA; 21 - 24 SEPTEMBER 2008, ACM, NEW YORK, NY, USA, 21 September 2008 (2008-09-21), pages 10 - 19, XP058272589, ISBN: 978-1-60558-136-1, DOI: 10.1145/ 1409635.1409638**
• **FEDERICO CASTANEDO ET AL: "Learning routines over long-term sensor data using topic models", EXPERT SYSTEMS., vol. 31, no. 4, 29 May 2013 (2013-05-29), GB, pages 365 - 377, XP055285342, ISSN: 0266-4720, DOI: 10.1111/ exsy.12033**
• **NABAEI BOSHRA ET AL: "Activity monitoring using topic models", 2016 IEEE CONFERENCE ON INTELLIGENCE AND SECURITY INFORMATICS (ISI), IEEE, 28 September 2016 (2016-09-28), pages 115 - 120, XP033005766, DOI: 10.1109/ISI.2016.7745453**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The present invention has its application within the information and communications technology sector, more specifically, relates to the deployment of tools which use data measurements from users' portable devices (e.g., applications in mobile user terminals such as smartphones or tablets, and wearables user devices such as smartwatches, etc.) for detecting users' deviant behaviour.

More particularly, the present invention refers to a computer implemented method and a system for detecting human abnormal behaviour.

### Background of the invention

People's routines can vary significantly in terms of movement, socializing and locations visited and in general they are much influenced by their working shifts and hours.

In existing systems that track people's routines for mental health applications using smartphones, basic statistical information derived from the distribution of mobile sensing data is used to determine these routines. While this was a great start to obtain routines passively from smartphone data, without the use of direct user inputs such as diaries, they are too simplified to obtain a complex user entity such as routines for the detection of deviant behaviours. Recent methods use contexts, such as time of the day and also extract more complex features such as circadian rhythms and regularity indices to approximate real world behaviours and contexts through which better routines can be obtained. However, they fail to use the wide array of formidable mathematical tools that can help in the closer and more accurate approximation of a user's routine.

Moreover, understanding when an alert should be provided by observing deviant behaviours was done in a simplistic manner. Methods established a threshold based on statistics and checked when an extracted feature exceeded this value significantly.

An example of a method and apparatus for modeling behavior using a probability distribution function is disclosed by US7202791B2. In this system, behaviours (in particular, activities) of an individual are modelled using the probability distribution functions of sensing modalities. Using basic thresholds, obtained from the statistics of the distribution function, the system flags if the user is engaged in a deviant behaviour that's away from their consistent/normal state of behaviour. An alert is established when a deviant behaviour occurs. This system uses basic statistics to establish regular routines of behaviours. Routines are significantly complex behaviours that are dependent on many factors, and basic statistics of sensing measurements cannot represent human routines accurately. This system's estimation of deivation behaviours is also simplistic and replies on the same statistical information.

US8606497B2 discloses a method for detecting and monitoring human activity utilizing location data. This is a basic method that is used to infer a person's engagement in an activity based on their location and time context. The method extracts a user's activity pattern over space and time using location data obtained from a personal communication device (mobile phones). This method obtains features from the GPS data to establish a location and time context used to derive a person's engagement in a certain activity, but it does not establish any routine that the user follows or how their behaviours can deviate.

US2019246968A1 discloses a system and a method for enabling responsive Cognitive Behavioral Therapy (CBT) by automatic monitoring of patient's behavior parameters that are relevant for adapting the frequency and/or the content and/or the structure and/or the interaction design of CBT sessions that a patient is attending, determining significant changes of behavior, assessing the progress of therapy and engaging with patients and/or therapists.

"Trajectories of depression: unobtrusive monitoring of depressive states by means of smartphone mobility traces analysis" by Canzian, L., et al. (Proceedings of the 2015 ACM international joint conference on pervasive and ubiquitous computing, pp. 1293-1304, ACM, September, 2015.) describes how smartphones can be used to unobtrusively monitor a user's depressive states. It obtains various features engineered from smartphone sensing data related to this purpose. One of these features is called routine index and is extracted from location data. This feature compares the number of locations visited by a user during a given time instance against the number of features visited by the same user during other time instances of the same interval. This is a clever way of establishing how regular the user is, in his/her location patterns, and thus creates a routine of sorts. However, this uses only location data and cannot be applied to other features or location together with other sensing data. Canzian, L., et al. do not provide the ability to use multiple multiple sensing modalities. Canzian, L., et al. use a single index that defines the user's routine but cannot obtain more in-depth features.

"Sensing behavioral change over time: Using within-person variability features from mobile sensing to predict personality traits" by Wang, W., et al. (Proceedings of the ACM on Interactive, Mobile, Wearable and Ubiquitous Technologies, 2(3), page 141, 2018) also uses time slots and obtains features within each slot to create a single feature like the regularity index. This paper looks at differences in sensing data within each person to create features (standard deviation, regularity index) that relate to one's routines. The regularity index is obtained using the cross-correlation of hourly sensing data over two-day pairs. This is then aggregated to obtain how regular the aggregate sensing features of a user are - describing how regularly a user behaves.

"The Social Rhythm Metric: An instrument to quantify the daily rhythms of life" by Monk, T. K., et al. (Journal of Nervous and Mental Disease, 1990) describes a psychometric instrument to obtain the routines and rhythms of a person's life, using a self reported questionnaire. This method has been used by the Psychological community to help users tackle behaviours that are against their routines, however such methods are not popular with users. While accurate, questionnaires like these are extremely tedious for a user to complete everyday. The pervasiveness of smartphones allows us to tackle this problem head on and not be a nuisance to users.

Therefore, there is a need in the state of the art for providing a personalized detection of abnormal behaviour related to clinical conditions using measurements from the users' smartphones and/or other portable and/or wearable devices.

## Summary of the invention

The present invention solves the aforementioned problems and overcomes previously explained state-of-art work limitations by providing a method that extracts the user's routine automatically from measurements obtained by the phone and wearables for each individual in a way that is personalised to the users' work shifts. The method defines ranges of low, medium and high for each measurement and generates documents where each word represents the time slot and sensor-based feature levels for that time slot. The method obtains personalized time slots for each user based on their past mobile usage patterns and active data information Further, through topic modelling, the most frequent topics are computed and thus the routines are automatically extracted, based on previously defined time slots and measurements' levels. Furthermore, the system computes deviations from the routine and alerts when these deviations are sufficiently high, suggesting that the user has deviated from their expected routine. This alert could be used by a clinician as an indication that a check-up is due.

The present invention can be applied to clinical systems so that the clinician can be aided by a dashboard of the routine of the user and their historical alerts, receiving automated alerts without the need of continuously monitoring and visualising dashboards of users' data. Furthermore, the present invention can be applied to (sub-)clinical envisioned systems where stress, depression and/or anxiety are being measured, and the routines extracted from the users' data can shed some light on why the users' level is particularly high or low depending on their extracted routine.

The present invention takes into account various contexts about the users, including when they are working or not working, whether they are at home or not, whether the sensing data was obtained during the week or the weekend, etc., to name but a few examples. Using these contexts, a smart data multiplexing method is proposed to extract sensor/feature levels in these time slots, and construct words and documents. Subsequently, topic modelling, which is a robust method for context estimation and data mining, is used to extract routines.

Routines: The proposed method first automatically extracts routines from users' data through the use of topic modelling for extracting most frequent topics and keywords from a set of words constructed artificially based on the measurements' levels. None of the existing systems consider forming words with measurements' levels. Moreover, this method goes beyond the standard state of the art where topic modelling has been applied to location for mobility patterns, as it constructs novel keywords; where a combination of personalized time slot allocation and different sensor-based feature levels, tailored to the users' distribution of past values, are captured. Moreover, the method goes beyond aggregated measures such as mean and standard deviation routine indexes that are most commonly found in the literature by extracting the routine automatically through most frequent sensors level detection within a time slot defined personal to the user.

Alerting: The proposed method sends alerts when a significant deviation occurs from the routine extracted in the current data. This deviation takes into account, through weights, the correlation of the measurements with the target feature (e.g., depression level) and also the distance from the routine level (e.g., noise level currently is high compared to low in the routine). None of the existing systems take into consideration such computations in the alert mechanisms. Moreover, multiple weights vectors can be added, allowing the alert mechanism to have personalized and tuned alerts for each condition monitored (e.g., depression, anxiety, wellbeing measures, etc.).

A first aspect of the present invention refers to a computer implemented method for detecting human abnormal behaviour, comprising the following steps:

- data preprocessing which comprises:

  - defining time intervals for a user by extracting time intervals based on historical data from raw sensors and personalizing the extracted time intervals per user based on active data input by the user or inferred data from the raw sensors, wherein defining time intervals comprises dividing the extracted time intervals to obtain time slots and personalizing the time slots per user based on active data input through a questionnaire filled by the user and/or inferred data defining routines of the user based on location and/or activities obtained by a machine learning algorithm;

- constructing words for the user and each time interval extracted for the user, wherein a word is constructed as a vector comprising a current time slot personalized for the user within the extracted time interval and a plurality of sensor-based feature levels, wherein constructing words for the user comprises computing a plurality of sensor-based features for the user as aggregations of the raw sensors data and assigning the plurality of sensor-based feature levels to the plurality of computed sensor-based features, the plurality of sensor-based feature levels being assigned based on the value of the sensor-based feature computed during the current time slot and the comparison of said value with the values of the sensor-based feature computed for the corresponding time slots of the rest of the extracted time intervals personalized for the user;

- constructing a text document with the constructed words based on the defined time intervals and the assigned sensor-based feature levels for the user;

- extracting routines for each defined time interval by extracting the most frequent words from the constructed documents using topic modelling to obtain a routine vector; and

- alert generation comprising triggering an alert if a deviation is detected between the sensor-based features extracted in the current time slot and a past routine extracted for a past time slot previous to the current time slot taking into account a computed distance between the routine vector extracted for the current time slot and a current level vector constructed based on the assigned sensor-based feature levels and computed weights from the correlation between each computed sensor-based feature and a target feature previously defined, giving priority to the computed features which are most correlated to the target feature.

A second aspect of the present invention refers to a processing system configured to implement the method described before.

The method and system in accordance with the above described aspects of the invention has a number of advantages with respect to the aforementioned prior art, which can be summarized as follows:

- None of the existing techniques consider combining measurements' levels with topic modelling for deriving new insights into users' routines and for alerting when deviations from these routines are significant, making the proposed method of deviant behaviour detection more robust and allowing the possibility to tune the alerting mechanism for multiple conditions.

- While existing techniques use basic statistics from sensing data, along with basic time contextualisation, and create alerts using simple estimations based on distribution statistics, the proposed in-depth method for extracting routines significantly improves over the state of the art as a complex understanding of routines is established. Also, the method goes beyond the state of the art in triggering alarms by understanding how much each sensing information is related to the output variable, as it uses a combination of weighted distances from the calculated routines to trigger alarms.

- Personalisation is a key advantage of the invention since knowing the user's routines can help a clinician to obtain relevant information about the user's clinical conditions as follows:

    o the right time to intervene with targeted interventions:

        i) based on location (at home, work or outdoor);
        ii) based on deviations (e.g., a check-up from the clinician when the deviation exceeds the normal amount);

    o Insights to the user, coupled with their stress, depression and/or anxiety levels, observing which routines are helpful for reducing their symptoms.

- The proposed method/system does not rely on raw sensor values, but levels, which enables it to be ported to different products with minor adjustments.

These and other advantages will be apparent in the light of the detailed description of the invention.

**Description of the drawings**

For the purpose of aiding the understanding of the characteristics of the invention, according to a preferred practical embodiment thereof and in order to complement this description, the following Figures are attached as an integral part thereof, having an illustrative and non-limiting character:

Figure 1 shows a block diagram of the system architecture, according to a possible embodiment of the invention.

Figure 2 shows a schematic representation of an output dashboard of results provided by the system.

Figure 3 shows an example of a word constructed by the system based on time slot and sensor feature levels.

Figure 4 shows a flow diagram of the system, according to a possible embodiment of the invention.

Figure 5 shows an example of a word constructed by the system based on raw values of the sensor features and levels of the sensor features.

Figure 6 shows an example of an alarm generation by the system based on a routine extracted as one keyword for a specific time slot.

**Preferred embodiment of the invention**

The embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

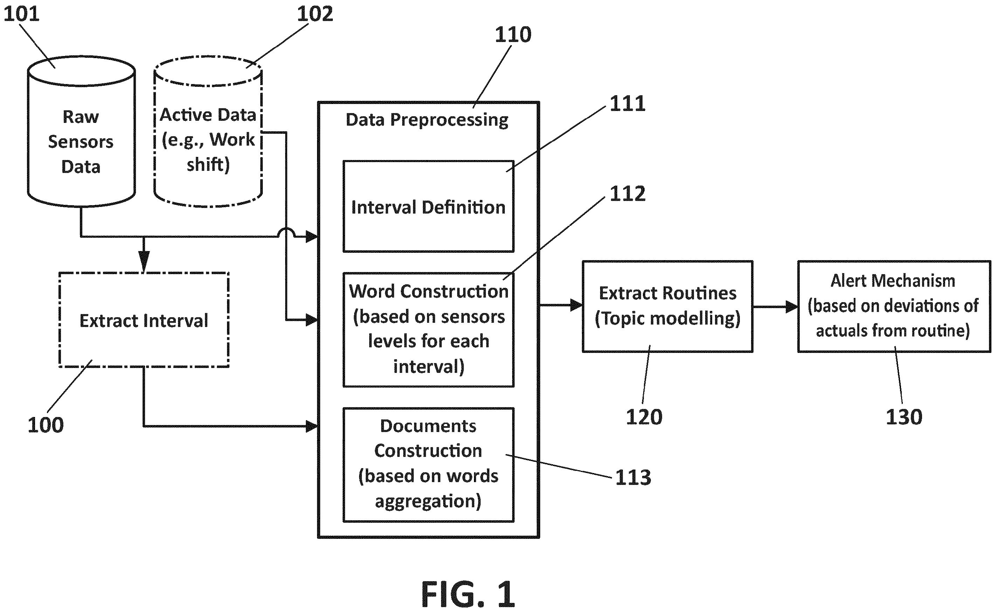

Figure 1 shows an overview of the system architecture for detecting abnormal behaviour, according to a preferred embodiment, where the main blocks are: data preprocessing (110), routines extraction (120) and alert generation (130).

The system uses raw sensors data (101) coming from different input data sources:

- Mobile phone sensors (e.g., screen unlock, accelerometer, light, noise, steps, GPS, battery etc.) from which additional measurements can be derived (e.g., number of steps, number of locations visited, noise level exposed to, light level, battery consumed, etc.). Some of these can be proxies for health-related measurements, for instance time spent at home is considered a proxy for social isolation looking at social anxiety and other clinical models.
- Wearables sensors (e.g., PPG, EDA, thermometer), from which physiological measurements and biomarkers can be derived (e.g., heart rate, heart rate variability, blood pressure, temperature etc.)

The measurements extracted from raw sensors data can be also referred to as sensor-based features or even simpler features, a common term used in machine learning for referring to input and target variables.

In addition, the system active data (102) can use as input; i.e., data that the user inputs manually, such as what is their work shift, personality through active forms/questionnaires.

In further detail, the system blocks depicted in Figure 1 perform the following steps of a method for detecting abnormal behaviour by:

- Data Preprocessing (110):

    a. Interval definition (111): Firstly, the method extracts relevant time intervals or slots taking into consideration typical country routines or specific user routines in a way that is personalised to the user. For personalization, a) user's input active data (102) is used through a questionnaire to specify their working hours and typical home hours, or b) a machine learning-based approach to capture raw sensors data (101) related to the work, outdoor activities, home (i.e., location categories) is used to infer how the user spends their time and thus define the relevant time intervals in a personalised manner.

    b. Word construction (112): Further, data is split based on the time slots extracted from the previous step of interval definition (111), either using active data (102) input by the user or inferred from the raw sensor data (101).

    Based on the raw sensor data in a defined time slot, the method computes aggregations of sensor-based features (e.g., steps sum) and, based on their distributions, the method maps ranges of values into different levels for each sensor-based feature, for example: low, medium and high levels.

    The sensor feature levels can be expanded in more categories, depending on the quality of the raw sensor data.

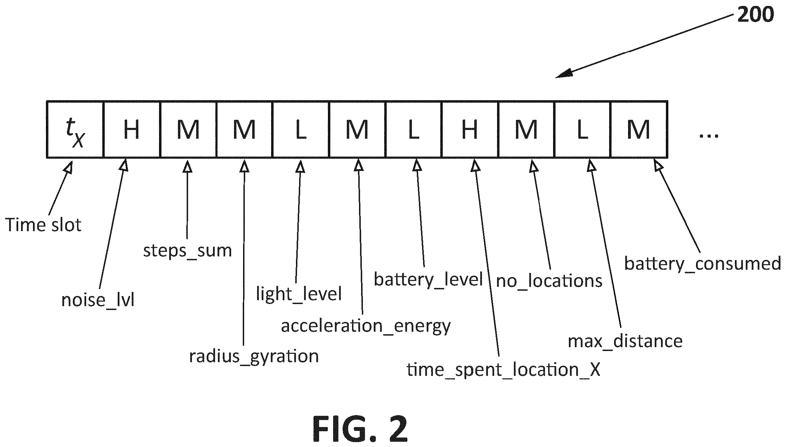

    Furthermore, based on the sensor feature level, a word is constructed as a tuple <time slot, feature_1_level, ..., feature_n_level>; feature_i_level being in $\{H, M, L\}$, where L stands for *Low*, M for *Medium*, and H for *High*, and i = 1, 2,...,n, where n represents the number of features built based on the sensors raw values. An example of such a word (200) is shown in Figure 2. Figure 2 illustrates an example of the word (200) constructed as a tuple based on time slot ($t_x$) and the three distinguished sensor feature levels: high level (H), medium level (M) and low level (L). The words follow the same order (e.g., in the example shown in Figure 2, the second letter always represents the level of the noise).

    c. Document construction (113): Furthermore, based on the sensor feature levels and time intervals defined, text documents are built based on the words (200) constructed in the previous step

- Routine extraction (120): The time-slot routine is then captured using topic modelling by extracting the most frequent words from the constructed documents.
- Alert generation (130): Deviations from time-slot routines then can easily be computed by observing current pattern for the time-slot versus the routine calculated. Thus, the method then detects when there is a deviation from the routine captured before and alerts when there are irregular patterns. The alert mechanism takes into account both the distance from the routine extracted, and also the weights vector which represents correlations observed between the target feature (e.g., anxiety level, depression level, well-being score) and the sensor-based features.

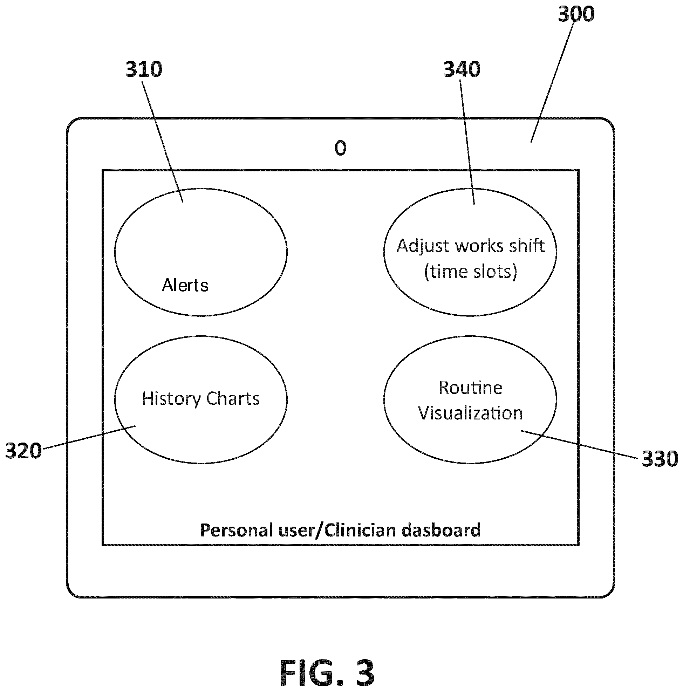

A system dashboard (300) presenting the results output by the proposed system is depicted in Figure 3, where the alerts (310), history charts (320), routines (330) can be visualized, and different time slots separations can be set or configured (340) by the end user. Moreover, the information extracted on a user's routine can be constantly provided to the user through the display on his/her portable devices (smartphones, tablet, smartwatch etc.) and so the user can also monitor his/her daily behaviours. This personal monitorization can persuade the users to change their behaviours so that they can stay in range of their regular routine behaviours. Additionally, alerts can be provided by beeps on their portable (and wearable) devices or change in regular user interface during exceptional situations, or using any other (visible, audible,...) means for notifying/presenting the alerts to the end user. This alert presentation on the users' devices trigger them to alter their behaviours significantly.

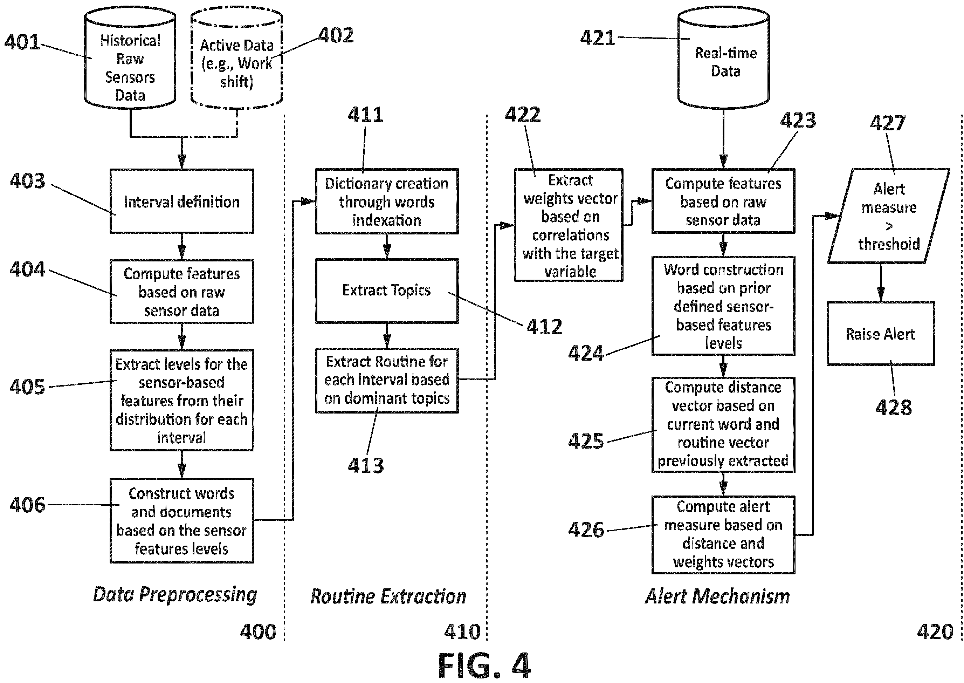

The core blocks of the system architecture, shown in Figure 1, are described in detail below and illustrated in the flow diagram of the system depicted in Figure 4 as follows:

- Data Preprocessing (110, 400): The data preprocessing is applied on a per user basis. The data of each user is processed applying the aforementioned three steps, a) interval definition (111), b) word construction (112), and c) document construction (113), further detailed below:

- Intervals definition (111, 403):

    For user $U_k$, $k = 1,...,K$ a number of types of days, *Num_type_days,* is defined. Each type of day (*TD*) is divided into $N_{TD}$ non-overlapping intervals. Those intervals are personalised to the users in a way that they are meaningful to them (e.g. taking into account different work-shifts). In a possible embodiment, there are three ways to define the intervals:

    i) Based on the country where the user lives (and equal for all users within the country): the typical routines followed in the country where the user is located, obtained from historiacal raw sensors data (401) are used to define the intervals. For example, each weekday can be divided into three intervals: Morning 7h00-13h00, Afternoon 13h00-22h00 and Night 22h00-7h00.
    ii) Personalized per user with active feedback from user: The definition of the time intervals also use the user's active data (402) input through a questionnaire in which the user fills how a normal day could be divided; e.g. for user: Monday to Friday, $U_1$ does 0h-8h at home, 8h-9h commuting, 9h-17h working, 17h-18h commuting, 18h-24h home; on weekends, $U_1$ usual splits is 0h-10h sleeping, 10h-13h shopping and housework, 13h-15h lunch, 15h-20h afternoon at home, 20h-0h going out.
    iii) Personalized per user with inferred intervals: Use a machine learning algorithm to derive the usual routines of the user, e.g., based on location by capturing when the user is normally static at the same area (applying a clustering technique based on time and location) and when does their typical transitions between areas. This approach can be used to define automatically relevant intervals of time that are user specific.

- Word construction (112):
The word construction process consists of two main steps: 1) feature computation (404) and 2) discretization by assigning levels (405) to the computed features for the construction (406) of the words and the documents with these words.

1) Feature computation (404):
Once the specific intervals are defined for each user, for user k, the system computes S features per interval and day as aggregations of the sensors data, denoted by ($F_{k,i,d,1},...,F_{k,id,S}$) for interval i and day d. Examples of aggregated features are: percentage of time spent in a certain location, battery consumed per minute, number of steps per minute, average light level, etc.

2) Word construction by Discretization:

Then, the system assigns or extracts (405) a level $L_{F_{k\,i,d,s}} \in \{l_{1,s}, l_{2,s},...,l_{L,s}\}$ for each feature $F_{k,i,d,s}$ for each interval i, day d and features, based on the value of the feature during that interval and how it compares with the values at the rest of the intervals. For example, the levels can be Low (L), Medium (M) or High (H) and the method to determine the mapping of the feature value to one of these three levels can be as follows:

For each feature $F_{k,i,d,s}$, the empirical distribution of its value is obtained using the values of all the intervals. Then, $F_{k,i,d,s}$ is below the 33rd percentile, $L_{F_{k,i,d,s}}$ = *Low*. If the value is between the 33rd and 66th percentile, $L_{F_{k,i,d,s}}$ = *Medium*. If the value is above the 66th percentile, $L_{F_{k,i,d,s}}$ = *High*. For user k, a given time interval $t_i$ and day d, the construction (502) of the word (500) for the raw sensor feature values (501) is defined as: $W_{k,i,d}$ = < $t_i$, $L_{F_{k,i,d,1}}$, $L_{F_{k,i,d,2}}$,...., $L_{F_{k,i,d,s}}$ > where $L_{F_{k,i,d,s}} \in [l_{1,s}, l_{2,s},...,l_{L,s}]$ and $L_{k,i,d,1}$,..., $L_{k,i,d,S}$ are the S feature values for the time interval i and day d.

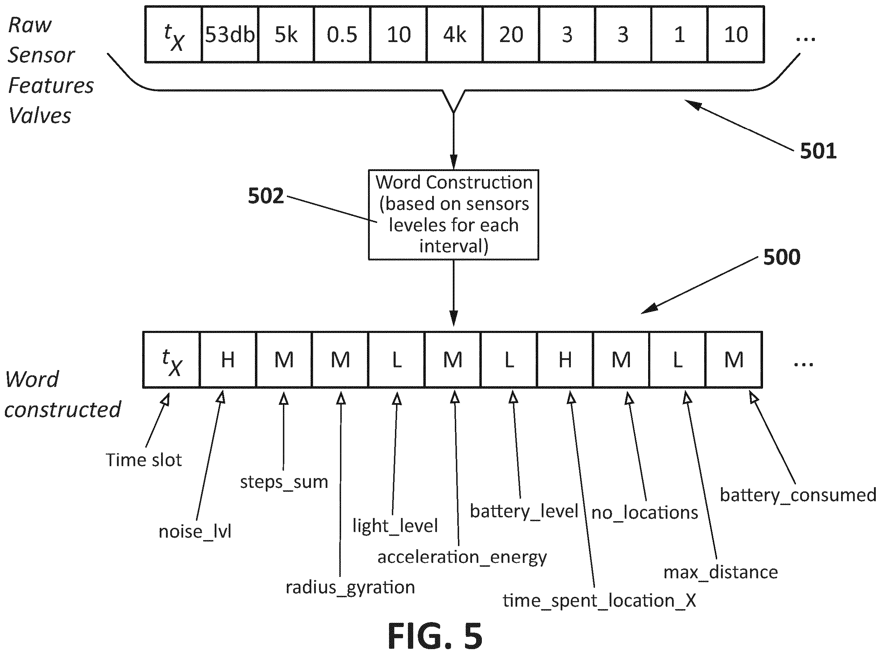

The result of this process is a word vector (500) with the time of the interval ($t_k$) and a level {H, M, L} for each of the features, as shown in the example of Figure 5, following the three levels mapping of the example described above; i.e., {H, M, L}, where L stands for Low, M for Medium, and H for High. Figure 5 shows how the word is constructed by the system based on both the raw values of the sensor features and the extrated levels of the sensor features. The order of the features is preserved for each defined interval, so that in the next step of the process the word vectors can be comparable.

- Document construction (113):

The *words* $w_{k,i,d}$ constructed in the previous step for user k are then grouped together to form N documents, denoted by $D_k = \{d_{k,1}, d_{k,2},...,d_{k,N}\}$. The documents can be created by grouping the words, according to a possible embodiment, in at least one of the following three different ways:

- Each document is the sequence of words of a certain day; i.e., a day would be "<$t_1$, L, M, M, H, .., M>, <$t_2$, L, M, M, H, .., L>, ..., <$t_m$, M, H, ..., L>".
- Each document is the sequence of words of a certain day of the week during a certain time frame. For example, a document is the sequence of words of all the Mondays during January 2018, another document is the sequence of words of all the Wednesdays during April 2017.
- Each document is the sequence of words of a certain type of day during a certain time frame. For example, a document is the sequence of words of all the weekdays during the week 34 of 2019.

- Routines extraction (120, 410) through topic modelling:

Once the words and documents $D_k$ are obtained for user k, the time-slot routines are captured using topic modelling by extracting the most frequent words $w_{k,i,d}$ from the documents $D_k$. The output of the topic modelling step is given in terms of a relationship between topics and words in the dictionary, e.g. through a conditional probability distribution.

This can be done with standard topic modelling methods such as Latent Dirichlet Allocation, LDA; e.g., LDA using Bag of Words or LDA using TF-IDF (Term Frequency-Inverse Document Frequency). Topic modelling involves a preprocessing of the data contained in the documents. In a possible embodiment, the Routines extraction (120, 410) is performed by applying LDA with bag of words. The application of this LDA method involves these three steps, 1) dictionary creation, 2) bag of Words encoding and 3) the application of LDA itself, as follows:

1) Dictionary creation (411):

This step involves indexing the unique words in the documents. For example, it can be done by listing the set of unique words in all documents and indexing them consecutively to create a table as the Table 1 below:

Table 1: Dictionary creation for document $d_k$

| Word | Index |
|---|---|
| <$t_1$, L, M, M, H, .., M>, | 0 |
| < $t_1$, M, L, H, M,.., L> | 1 |
| < $t_2$, L, M, M, H, .., L> | 2 |
| ... | |
| < $t_m$, M, H, ..., L> | N_w |

2) Bag of Words encoding:

For each document, the words within the document are mapped to the index using the dictionary and the word count or order within the document as [word_idx, word_count]. Alternatively, the TF-IDF score can be considered.

For example, for the document $d_k$ in Table 1:

$$d_k = \{<t_1, L, M, M, H, .., M>,<t\_2, L, M, M, H, .., L>, < t_1, L, M, M, H, .., M>,$$
$$..., < t_m, M, H, ..., L>\}$$

the following bag of words is encoded:

$$BoW_d = \{ [0, 2] , [2, 1],..., [N\_w, 1]\}$$

where $BoW_d$ denotes the bag of words encoding for the set of pairs [word_idx, word_count] for each word in a document d.

3) Application of LDA to extract topics (412):

The LDA method is applied to the bag of words encodings of all the documents $D_k$ of user $k$. The input to the LDA algorithm is typically the bag of words encodings of $D_k$ and a predefined number of topics $T$. The LDA algorithm uses dirichlet priors for the document-topic and word-topic distributions to establish a generative model and fit it to the data. With LDA, the method can extract topics (412) from a document corpus, where each topic $Y$ is human-interpretable and characterized by the words that they are most strongly associated with. The characterization is done in terms of the conditional distribution for each word $w_s$ to appear in a document $d$, given that $d$ is of topic $Y$. For example, using common words instead of those in Figures 2 and 5, a "topic 2" could be characterized by having a higher probability of generating terms such as "oil, gas, drilling, pipes, Keystone, energy," etc. and not others within the dictionary. In the context of the invention, the topics are the common routines or behaviours characterizing types of days and its relationship with the defined words (200, 500) shown in Figures 2 and 5.

The LDA method uses variational inference to fit the generative model, predefined, which allows to characterize an approximation of the posterior distributions of the model word-topic to the available data in the corpus.

Furthermore, for a new document $d_j$, the probability of $d_j$ belonging to each topic can be inferred using the characterized conditional probability given the words in $d_j$, e.g. 5% topic 1, 70% topic 2, 10% topic 3, etc.

Based on the dominant topics, the routines of the user are extracted (413) for each defined interval.

Alternatively, other topic modelling methods could be applied such as LSA (Latent Semantic Analysis), PLSA (Probabilistic Latent Semantic Analysis) and lda2Vec (LDA in Deep Learning).

- Alert generation (420)
The alert mechanism takes into consideration the following two aspects:

i) Distance, **d,** is computed (425) as the absolute difference between the routine vector and current level vector, where each level is mapped to the following numbers, for example: High level to number 3, Medium to number 2, and Low to number 1. As such, for instance the distance between Low (in routine) and High (in actual) for the noise level is 2. The current level vector, extracted as a word or keyword, is constructed (424) based on the sensor-based feature levels previously defined for each feature computed (423) using the real-time raw sensor data (421).
ii) Weights, **w,** are computed (422) from the correlation between the sensor-based feature and the target feature (e.g., depression level). Thus, this gives priority to features that are higher correlated to the target feature (e.g., steps sum, or sleep duration compared to battery level for depression).

Through this, the goals of the alarm generation (420) mechanism are:

- Diversity: by utilizing a weights vector per target variable, the system is able to adapt for detecting signs of various abnormal conditions through the use of correlations between the features and target (e.g., anxiety level, depression level, well-being score).

- Accuracy: to be more accurate as the routine is captured automatically and
- Personalization and granularity: to specify at a much more granular level what part of the user's routine has been affected, in terms of being captured per interval, per individual and per sensor level.

Based on the calculated distance vector and weights vector, the method can determine the features that are most different: steps sum, accelerometer-based energy, time spent at home, etc.

An alert measure **a** is computed (426) as:

$$a = \sum_i^n \quad w_i \; * \; d_i$$

where

i= 1, 2... n, n representing the number of features built based on the sensors raw values,

$w_i$ represents the weight as the correlation between the feature i and the target feature, and

$d_i$ represents the distance between the current level and routine level for feature i.

The computed alert measure a is compared with a threshold value (427), such as the average, 75th percentile value etc., and the alerts are raised or triggered (428) when the alert measure a is higher than the threshold value determined (by the system or by the user). The user can label the alert as true or false, and then the system can learn the threshold as it goes. Moreover, the threshold can also be set by the clinician or end user.

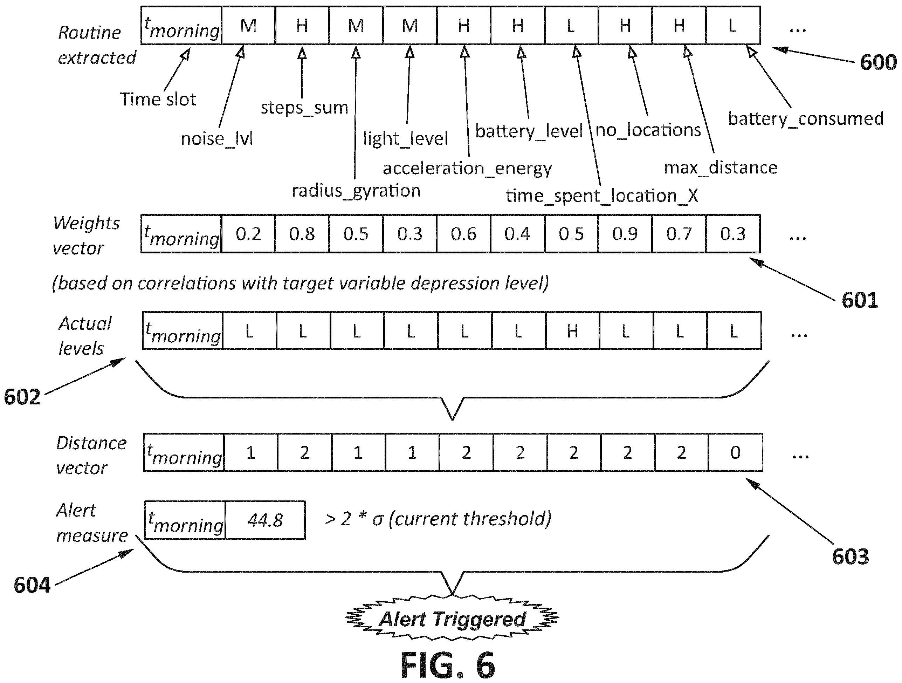

Figure 6 shows an example of the alert mechanism in a possible embodiment. An example of a routine extracted as one keyword (600), along with the weights vector (601), is illustrated for a time interval defined as the current morning. The distance vector (603) is computed as the distance between i) the keyword (600) extracted from the most dominant topic extracted for each time interval, and ii) the actual keyword (602); i.e, the absolute difference between the routine vector and the current levels vector for the current morning, as shown in Figure 6.

Based on these, the alert measure is computed (604) and based on an identified threshold ($\sigma$), an alert is triggered when this morning's sensor features levels are too divergent from the extracted routine.

Note that in this text, the term "comprises" and its derivations (such as "comprising", etc.) should not be understood in an excluding sense, that is, these terms should not be interpreted as excluding the possibility that what is described and defined may include further elements, steps, etc.

**Claims**

1. A computer implemented method for detecting human abnormal behaviour, **characterized by** comprising:

    - data preprocessing (110, 400) which comprises:

        - defining time intervals (111, 403) for a user by extracting (100) time intervals based on historical data from raw sensors (101, 401) and personalizing the extracted time intervals per user based on active data (102, 402) input by the user or inferred data from the raw sensors (101, 401), wherein defining time intervals (111, 403) comprises dividing the extracted (100) time intervals to obtain time slots and personalizing the time slots per user based on active data (402) input through a questionnaire filled by the user and/or inferred data defining routines of the user based on location and/or activities obtained by a machine learning algorithm;
        - constructing words (112) for the user and each time interval extracted for the user, wherein a word (200, 500, 600, 602) is constructed as a vector comprising a current time slot personalized for the user within the extracted time interval and a plurality of sensor-based feature levels, wherein constructing words (112) for the user comprises computing (404) a plurality of sensor-based features for the user as aggregations of the raw sensors data (101, 401, 421) and assigning the plurality of sensor-based feature levels (405) to the plurality of computed sensor-based features, the plurality of sensor-based feature levels (405) being assigned based on the value of the sensor-based feature computed during the current time slot and the comparison of said value with the values of the sensor-based feature computed for the corresponding time slots of the rest of the extracted time intervals personalized for the user; and
- constructing a text document (113) with the constructed words (200, 500, 600, 602) based on the defined time intervals and the assigned sensor-based feature levels for the user;

- extracting routines (120, 410) for each defined time interval by extracting the most frequent words from the constructed documents using topic modelling to obtain a routine vector; and
- alert generation (130, 420) comprising triggering an alert (428) if a deviation is detected between the sensor-based features extracted in the current time slot and a past routine extracted for a past time slot previous to the current time slot taking into account a computed (425) distance between the routine vector extracted for the current time slot and a current level vector constructed (424) based on the assigned sensor-based feature levels and computed (422) weights from the correlation between each computed sensor-based feature and a target feature previously defined, giving priority to the computed features which are most correlated to the target feature.

2. The method according to claim 1, wherein an order of the computed sensor-based features is preserved in the vector constructed for each defined time interval.

3. The method according to any preceeding claim, wherein the sensor-based features are computed as aggregated features extracted from mobile phone sensors and wearables sensors.

4. The method according to any preceeding claim, wherein the sensor-based features are selected from percentage of time spent in a certain location, battery consumed per minute, number of steps per minute and average light level.

5. The method according to any preceeding claim, wherein constructing the text document (113) for the user comprising grouping the constructed words (200, 500, 600, 602) in at least one of the following three different ways:

- each document is the sequence of the words constructed during a specific day of the week;
- each document is the sequence of the words constructed for the specific day and during a specific defined time interval;
- each document is the sequence of the words constructed for a specific type of day and during the specific defined time interval.

6. The method according to any preceeding claim, wherein extracting routines (120, 410) uses topic modelling selected from LDA using Bag of Words or LDA using TF-IDF, LSA, PLSA and lda2Vec.

7. The method according to any preceeding claim, wherein extracting routines (120, 410) for the user and for each defined time interval uses LDA with Bag of Words and comprising:

- creating a dictionary (411) by indexing the words of the constructed documents which are unique;
- encoding bags of words by mapping each constructed word (200, 500, 600, 602) to the index according to the created dictionary (411) and to the order of the word within the document;
- extracting topics (412) from the constructed documents by applying LDA to the encoded bags of words;
- based on the dominant extracted topics, the routines of the user are extracted (413) for each defined time interval.

8. The method according to any preceeding claim, wherein alert generation (130, 420) comprising:

- based on the calculated distance and weights, computing (426) an alert measure, a, as follows:

$$a = \sum_{i}^{n} w_i * d_i$$

where

i= 1, 2... n, n representing the number of sensor-based features computed (423) using the real-time raw sensor data (421),
$w_i$ represents the weight as the correlation between the sensor-based feature number i and the target feature, and

di represents the distance between the current level and the level of the sensor-based feature number i in the extracted routine vector;

- comparing (427) the computed alert measure, a, with a determined threshold value;
- triggering (428) the alerts when the computed alert measure, a, is higher than the threshold value.

9. A system for detecting human abnormal behaviour, the system comprising a memory that stores computer-readable code and a processor operatively coupled to the memory, **characterized in that** the processor is configured to implement the computer-readable code to:

- define time intervals (111, 403) for a user by extracting (100) time intervals based on historical data from raw sensors (101, 401) and personalizing the extracted time intervals per user based on active data (102, 402) input by the user or inferred data from the raw sensors (101, 401), wherein defining time intervals (111, 403) comprises dividing the extracted (100) time intervals to obtain time slots and personalizing the time slots per user based on active data (402) input through a questionnaire filled by the user and/or inferred data defining routines of the user based on location and/or activities obtained by a machine learning algorithm;
- construct words (112) for each time interval extracted for the user, wherein a word (200, 500, 600, 602) is constructed as a vector comprising the defined time interval a current time slot personalized for the user within the extracted time interval and a plurality of sensor-based feature levels, wherein constructing words (112) for the user comprises computing (404) a plurality of sensor-based features for the user as aggregations of the raw sensors data (101, 401, 421) and assigning the plurality of sensor-based feature levels (405) to the plurality of computed sensor-based features, the plurality of sensor-based feature levels (405) being assigned based on the value of the sensor-based feature computed during the current time slot and the comparison of said value with the values of the sensor-based feature computed for the corresponding time slots of the rest of the extracted time intervals personalized for the user;
- construct a text document (113) with the constructed words (200, 500, 600, 602) based on the defined time intervals and the assigned sensor-based feature levels for the user;
- extract routines (120, 410) for each defined time interval by extracting the most frequent words from the constructed documents using topic modelling to obtain a routine vector; and
- generate alerts (130, 420), wherein an alert is triggering (428) if a deviation is detected between the sensor-based features extracted in the current time slot and a past routine extracted for a past time slot previous to the current time slot taking into account a computed (425) distance between the routine vector extracted for the current time slot and a current level vector constructed (424) based on the assigned sensor-based feature levels and computed (422) weights from the correlation between each computed sensor-based feature and a target feature previously defined, giving priority to the computed features which are most correlated to the target feature.

10. The system according to claim 9, further comprising a dashboard (300) comprising a user interface configured to provide a user with at least one of: a visualization (330) of the extracted routines, a presentation (310) of the generated alerts, configuration means (340) of the defined time intervals, a visualization (320) of history data stored in the memory.

11. The system according to any of claims 9-10, wherein the processor is further configured to compute the sensor-based features as aggregated features extracted from mobile phone sensors and wearables sensors.

12. The system according to any of claims 9-11, wherein the sensor-based features are selected from percentage of time spent in a certain location, battery consumed per minute, number of steps per minute and average light level.

13. The system according to any of claims 9-12, wherein the topic modelling is selected from LDA using Bag of Words or LDA using TF-IDF, LSA, PLSA and Ida2Vec.

**Patentansprüche**

1. Computerimplementiertes Verfahren zum Erkennen von abweichendem menschlichem Verhalten, **dadurch gekennzeichnet, dass** es Folgendes umfasst:

- Datenvorverarbeitung (110, 400), die Folgendes umfasst:

- Definieren von Zeitintervallen (111, 403) für einen Benutzer durch Extrahieren (100) von Zeitintervallen basierend auf historischen Daten von Rohsensoren (101, 401) und Personalisieren der extrahierten Zeitintervalle pro Benutzer auf Basis aktiver Daten (102, 402), die von dem Benutzer eingegeben werden, oder abgeleiteter Daten von den Rohsensoren (101, 401), wobei das Definieren von Zeitintervallen (111, 403) das Unterteilen der extrahierten (100) Zeitintervalle umfasst, um Zeitfenster zu erhalten, und das Personalisieren der Zeitfenster pro Benutzer auf Basis aktiver Daten (402), die über einen vom Benutzer ausgefüllten Fragebogen eingegeben werden, und/oder abgeleiteter Daten, die Routinen des Benutzers basierend auf Ort und/oder Aktivitäten definieren, die durch einen Algorithmus für maschinelles Lernen erhalten werden;
- Erstellen von Wörtern (112) für den Benutzer und jedes für den Benutzer extrahierten Zeitintervalls, wobei ein Wort (200, 500, 600, 602) als Vektor erstellt wird, der ein für den Benutzer personalisiertes aktuelles Zeitfenster innerhalb des extrahierten Zeitintervalls und eine Vielzahl von sensorbasierten Merkmalsstufen umfasst, wobei das Erstellen von Wörtern (112) für den Benutzer das Berechnen (404) einer Vielzahl von sensorbasierten Merkmalen für den Benutzer als Aggregationen der Sensorrohdaten (101, 401, 421) und das Zuweisen der Vielzahl von sensorbasierten Merkmalsstufen (405) an die Vielzahl von berechneten sensorbasierten Merkmalen umfasst, wobei die Vielzahl von sensorbasierten Merkmalsstufen (405) anhand des Werts des sensorbasierten Merkmals, das während des aktuellen Zeitfensters berechnet wurde, und des Vergleichs dieses Werts mit den Werten des sensorbasierten Merkmals, das für die entsprechenden Zeitfenster der restlichen für den Benutzer personalisierten extrahierten Zeitintervalle berechnet wurden, zugewiesen werden; und
- Erstellen eines Textdokuments (113) mit den erstellten Wörtern (200, 500, 600, 602) anhand der definierten Zeitintervalle und der zugewiesenen sensorbasierten Merkmalsstufen für den Benutzer;

- Extrahieren von Routinen (120, 410) für jedes definierte Zeitintervall durch Extrahieren der häufigsten Wörter aus den erstellten Dokumenten unter Verwendung von Topic Modeling, um einen Routinenvektor zu erhalten; und
- Alarmgenerierung (130, 420), die das Auslösen eines Alarms (428) umfasst, wenn eine Abweichung zwischen den in dem aktuellen Zeitfenster extrahierten sensorbasierten Merkmalen und einer für ein vergangenes Zeitfenstervor dem aktuellen Zeitfenster extrahierten vergangenen Routine erkannt wird, wobei ein berechneter (425) Abstand zwischen dem für das aktuelle Zeitfenster extrahierten Routinenvektor und einem Vektor der aktuellen Stufe, der auf Basis der zugewiesenen sensorbasierten Merkmalsstufen erstellt (424) wurde, und berechnete (422) Gewichtungen aus der Korrelation zwischen jedem berechneten sensorbasierten Merkmal und einem zuvor definierten Zielmerkmal berücksichtigt werden, wobei den berechneten Merkmalen, die am stärksten mit dem Zielmerkmal korrelieren, Priorität eingeräumt wird.

2. Verfahren nach Anspruch 1, wobei eine Reihenfolge der berechneten sensorbasierten Merkmale in dem für jedes definierte Zeitintervall erstellten Vektor beibehalten wird.

3. Verfahren nach einem der vorhergehenden Ansprüche, wobei die sensorbasierten Funktionen als aggregierte Funktionen berechnet werden, die von Mobiltelefonsensoren und Sensoren von Wearables extrahiert werden.

4. Verfahren nach einem der vorhergehenden Ansprüche, wobei die sensorbasierten Merkmale aus dem Prozentsatz der an einem bestimmten Ort verbrachten Zeit, des Batterieverbrauchs pro Minute, der Anzahl der Schritte pro Minute und der durchschnittlichen Lichtstärke ausgewählt werden.

5. Verfahren nach einem der vorhergehenden Ansprüche, wobei das Erstellen des Textdokuments (113) für den Benutzer das Gruppieren der erstellten Wörter (200, 500, 600, 602) auf mindestens eine der folgenden drei verschiedenen Arten umfasst:

- jedes Dokument ist die Abfolge der Wörter, die an einem bestimmten Wochentag erstellt wurde;
- jedes Dokument ist die Abfolge der Wörter, die für den bestimmten Tag und während eines bestimmten Zeitintervalls erstellt wurde;
- jedes Dokument ist die Abfolge der Wörter, die für eine bestimmte Art von Tag und während des bestimmten Zeitintervalls erstellt wurden.

6. Verfahren nach einem der vorhergehenden Ansprüche, wobei das Extrahieren von Routinen (120, 410) Topic Modeling verwendet, das aus LDA mit Bag of Words oder LDA mit TF-IDF, LSA, PLSA und Ida2Vec ausgewählt ist.

7. Verfahren nach einem der vorhergehenden Ansprüche, wobei das Extrahieren von Routinen (120, 410) für den Benutzer und für jedes definierte Zeitintervall LDA mit Bag of Words verwendet und Folgendes umfasst:

- Erstellen eines Wörterbuchs (411) durch Indizieren der Wörter der erstellten Dokumente, die eindeutig sind;
- Codieren von Bags of Words durch Zuordnen jedes erstellten Worts (200, 500, 600, 602) zum Index gemäß dem erstellten Wörterbuch (411) und der Reihenfolge des Worts im Dokument;
- Extrahieren von Themen (412) aus den erstellten Dokumenten durch Anwenden von LDA auf die kodierten Bags of Words;
- auf Basis der extrahierten dominanten Themen werden die Routinen des Nutzers für jedes definierte Zeitintervall extrahiert (413).

8. Verfahren nach einem der vorhergehenden Ansprüche, wobei die Alarmgenerierung (130, 420) Folgendes umfasst:

- Berechnen (426) eines Alarmmaßes a auf Basis des berechneten Abstands und der Gewichtungen wie folgt:

$$a = \sum_{i}^{n} \quad w_i \; * \; d_i$$

wobei

i= 1, 2... n, wobei n die Anzahl der sensorbasierten Merkmale darstellt, die unter Verwendung der Echtzeit-Sensorrohdaten (421) berechnet werden (423),
$W_i$ die Gewichtung als Korrelation zwischen dem sensorbasierten Merkmal Nummer i und dem Zielmerkmal darstellt, und
di der Abstand zwischen der aktuellen Stufe und der Stufe der sensorbasierten Merkmalsnummer i im extrahierten Routinenvektor ist;

- Vergleichen (427) des berechneten Alarmmaßes a mit einem bestimmten Schwellenwert;
- Auslösen (428) der Alarme, wenn das berechnete Alarmmaß a höher ist als der Schwellenwert.

9. System zum Erkennen von abweichendem menschlichem Verhalten, wobei das System einen Arbeitsspeicher, der computerlesbaren Code speichert, und einen mit dem Arbeitsspeicher wirkverbundenen Prozessor umfasst, **dadurch gekennzeichnet, dass** der Prozessor so konfiguriert ist, dass er den computerlesbaren Code implementiert, zum:

- Definieren von Zeitintervallen (111, 403) für einen Benutzer durch Extrahieren (100) von Zeitintervallen basierend auf historischen Daten von Rohsensoren (101, 401) und Personalisieren der extrahierten Zeitintervalle pro Benutzer auf Basis aktiver Daten (102, 402), die von dem Benutzer eingegeben werden, oder abgeleiteter Daten von den Rohsensoren (101, 401), wobei das Definieren von Zeitintervallen (111, 403) das Unterteilen der extrahierten (100) Zeitintervalle umfasst, um Zeitfenster zu erhalten, und das Personalisieren der Zeitfenster pro Benutzer auf Basis aktiver Daten (402), die über einen vom Benutzer ausgefüllten Fragebogen eingegeben werden, und/oder abgeleiteter Daten, die Routinen des Benutzers basierend auf Ort und/oder Aktivitäten definieren, die durch einen Algorithmus für maschinelles Lernen erhalten werden;
- Erstellen von Wörtern (112) für jedes für den Benutzer extrahierten Zeitintervalls, wobei ein Wort (200, 500, 600, 602) als Vektor erstellt wird, der ein für den Benutzer personalisiertes aktuelles Zeitfenster innerhalb des extrahierten Zeitintervalls und eine Vielzahl von sensorbasierten Merkmalsstufen umfasst, wobei das Erstellen von Wörtern (112) für den Benutzer das Berechnen (404) einer Vielzahl von sensorbasierten Merkmalen für den Benutzer als Aggregationen der Sensorrohdaten (101, 401, 421) und das Zuweisen der Vielzahl von sensorbasierten Merkmalsstufen (405) an die Vielzahl von berechneten sensorbasierten Merkmalen umfasst, wobei die Vielzahl von sensorbasierten Merkmalsstufen (405) anhand des Werts des sensorbasierten Merkmals, das während des aktuellen Zeitfensters berechnet wurde, und des Vergleichs dieses Werts mit den Werten des sensorbasierten Merkmals, das für die entsprechenden Zeitfenster der restlichen für den Benutzer personalisierten extrahierten Zeitintervalle berechnet wurden, zugewiesen werden;
- Erstellen eines Textdokuments (113) mit den erstellten Wörtern (200, 500, 600, 602) anhand der definierten Zeitintervalle und der zugewiesenen sensorbasierten Merkmalsstufen für den Benutzer;
- Extrahieren von Routinen (120, 410) für jedes definierte Zeitintervall durch Extrahieren der häufigsten Wörter aus den erstellten Dokumenten unter Verwendung von Topic Modeling, um einen Routinenvektor zu erhalten; und

- Generieren von Alarmen (130, 420), die das Auslösen eines Alarms (428) umfasst, wenn eine Abweichung zwischen den in dem aktuellen Zeitfenster extrahierten sensorbasierten Merkmalen und einer für ein vergangenes Zeitfenster vor dem aktuellen Zeitfenster extrahierten vergangenen Routine erkannt wird, wobei ein berechneter (425) Abstand zwischen dem für das aktuelle Zeitfenster extrahierten Routinenvektor und einem Vektor der aktuellen Stufe, der auf Basis der zugewiesenen sensorbasierten Merkmalsstufen erstellt (424) wurde, und berechnete (422) Gewichtungen aus der Korrelation zwischen jedem berechneten sensorbasierten Merkmal und einem zuvor definierten Zielmerkmal berücksichtigt werden, wobei den berechneten Merkmalen, die am stärksten mit dem Zielmerkmal korrelieren, Priorität eingeräumt wird.

10. System nach Anspruch 9, das ferner ein Dashboard (300) mit einer Benutzerschnittstelle umfasst, die so konfiguriert ist, dass sie einem Benutzer mindestens eines der folgenden zur Verfügung stellt: eine Visualisierung (330) der extrahierten Routinen, eine Darstellung (310) der generierten Alarme, Konfigurationsmittel (340) der definierten Zeitintervalle, eine Visualisierung (320) der im Arbeitsspeicher gespeicherten Verlaufsdaten.

11. System nach einem der Ansprüche 9-10, wobei der Prozessor ferner so konfiguriert ist, dass er die sensorbasierten Merkmale als aggregierte Merkmale berechnet, die von Mobiltelefonsensoren und Wearables-Sensoren extrahiert werden.

12. Verfahren nach einem der Ansprüche 9-11, wobei die sensorbasierten Merkmale aus dem Prozentsatz der an einem bestimmten Ort verbrachten Zeit, des Batterieverbrauchs pro Minute, der Anzahl der Schritte pro Minute und der durchschnittlichen Lichtstärke ausgewählt werden.

13. Verfahren nach einem der Ansprüche 9-12, wobei das Topic Modeling aus LDA mit Bag of Words oder LDA mit TF-IDF, LSA, PLSA und Ida2Vec ausgewählt ist.

**Revendications**

1. Procédé mis en œuvre par ordinateur de détection de comportements humains anormaux, **caractérisé en ce qu'**il comprend :

- le prétraitement de données (110, 400) qui comprend :

- la définition d'intervalles de temps (111, 403) pour un utilisateur par extraction (100) d'intervalles de temps en fonction de données historiques de capteurs bruts (101, 401) et personnalisation des intervalles de temps extraits par utilisateur en fonction de données actives (102, 402) saisies par l'utilisateur ou de données déduites des capteurs bruts (101, 401), dans lequel la définition des intervalles de temps (111, 403) comprend la division des intervalles de temps extraits (100) pour obtenir des créneaux de temps et la personnalisation des créneaux de temps par utilisateur en fonction de données actives (402) saisies au moyen d'un questionnaire rempli par l'utilisateur et/ou de données déduites définissant des routines de l'utilisateur en fonction de la localisation et/ou d'activités obtenues par un algorithme d'apprentissage automatique ;
- la construction de mots (112) pour l'utilisateur et chaque intervalle de temps extrait pour l'utilisateur, dans lequel un mot (200, 500, 600, 602) est construit sous forme d'un vecteur comprenant un créneau de temps actuel personnalisé pour l'utilisateur au sein de l'intervalle de temps extrait et une pluralité de niveaux de caractéristiques en fonction des capteurs, dans lequel la construction de mots (112) pour l'utilisateur comprend le calcul (404) d'une pluralité de caractéristiques en fonction des capteurs pour l'utilisateur sous forme d'agrégations des données brutes de capteurs (101, 401, 421) et l'attribution de la pluralité de niveaux de caractéristiques en fonction des capteurs (405) à la pluralité de caractéristiques en fonction des capteurs calculées, la pluralité de niveaux de caractéristiques en fonction des capteurs (405) étant attribuée en fonction de la valeur de la caractéristique en fonction des capteurs calculée pendant le créneau de temps actuel et la comparaison de ladite valeur avec les valeurs de la caractéristique en fonction des capteurs calculée pour les créneaux de temps correspondants du reste des intervalles de temps extraits personnalisés pour l'utilisateur ; et
- la construction d'un document textuel (113) avec les mots construits (200, 500, 600, 602) en fonction des intervalles de temps définis et des niveaux de caractéristiques en fonction des capteurs attribués pour l'utilisateur ;

- l'extraction de routines (120, 410) pour chaque intervalle de temps défini par extraction des mots les plus fréquents des documents construits à l'aide d'une modélisation de thèmes afin d'obtenir un vecteur de routines ; et

- la génération d'alertes (130, 420) comprenant le déclenchement d'une alerte (428) si un écart est détecté entre les caractéristiques en fonction des capteurs extraites dans le créneau de temps actuel et une routine passée extraite pour un créneau de temps antérieur au créneau de temps actuel, en tenant compte d'une distance calculée (425) entre le vecteur de routine extrait pour le créneau de temps actuel et un vecteur de niveau actuel construit (424) en fonction des niveaux de caractéristiques en fonction des capteurs attribués et de poids calculés (422) à partir de la corrélation entre chaque caractéristique en fonction des capteurs calculée et une caractéristique cible antérieurement définie, en donnant la priorité aux caractéristiques calculées qui sont les plus corrélées à la caractéristique cible.

2. Procédé selon la revendication 1, dans lequel un ordre des caractéristiques en fonction des capteurs calculées est préservé dans le vecteur construit pour chaque intervalle de temps défini.

3. Procédé selon une quelconque revendication précédente, dans lequel les caractéristiques en fonction des capteurs sont calculées sous forme de caractéristiques agrégées extraites de capteurs de téléphones mobiles et de capteurs pouvant être portés sur soi.

4. Procédé selon une quelconque revendication précédente, dans lequel les caractéristiques en fonction des capteurs sont sélectionnées parmi le pourcentage de temps passé dans une certaine localisation, la batterie consommée par minute, le nombre de pas par minute et le niveau d'éclairage moyen.

5. Procédé selon une quelconque revendication précédente, dans lequel la construction du document textuel (113) pour l'utilisateur comprend le regroupement des mots construits (200, 500, 600, 602) d'au moins l'une des trois manières suivantes :

- chaque document est la séquence des mots construits pendant un jour spécifique de la semaine ;
- chaque document est la séquence des mots construits pour le jour spécifique et pendant un intervalle de temps défini spécifique ;
- chaque document est la séquence des mots construits pour un type de jour spécifique et pendant l'intervalle de temps défini spécifique.

6. Procédé selon une quelconque revendication précédente, dans lequel l'extraction de routines (120, 410) utilise une modélisation de thèmes choisie parmi LDA utilisant un sac de mots ou LDA utilisant TF-IDF, LSA, PLSA et lda2Vec.

7. Procédé selon une quelconque revendication précédente, dans lequel l'extraction de routines (120, 410) pour l'utilisateur et pour chaque intervalle de temps défini utilise LDA avec un sac de mots et comprenant :

- la création d'un dictionnaire (411) par indexation des mots des documents construits qui sont uniques ;
- le codage de sacs de mots par mise en correspondance de chaque mot construit (200, 500, 600, 602) avec l'index selon le dictionnaire (411) créé et l'ordre du mot au sein du document ;
- l'extraction de thèmes (412) des documents construits par application de LDA aux sacs de mots codés ;
- en fonction des thèmes extraits dominants, les routines de l'utilisateur sont extraites (413) pour chaque intervalle de temps défini.

8. Procédé selon une quelconque revendication précédente, dans lequel la génération d'alertes (130, 420) comprenant :

- en fonction de la distance et des poids calculés, le calcul (426) d'une mesure d'alerte, a, comme suit :

$$a = \sum_{i}^{n} w_i * d_i$$

où

i= 1, 2... n, n représentant le nombre de caractéristiques en fonction des capteurs calculées (423) à l'aide des données brutes des capteurs en temps réel (421),

$W_i$ représente le poids sous forme de corrélation entre le nombre i de caractéristiques en fonction des capteurs et la caractéristique cible, et

di représente la distance entre le niveau actuel et le niveau du nombre i de caractéristiques en fonction des capteurs dans le vecteur de routine extrait ;

- la comparaison (427) de la mesure d'alerte calculée, a, avec une valeur seuil déterminée ;
- le déclenchement (428) des alertes lorsque la mesure d'alerte calculée, a, est supérieure à la valeur seuil.

9. Système de détection de comportements humains anormaux, le système comprenant une mémoire qui stocke un code lisible par ordinateur et un processeur couplé de manière opérationnelle à la mémoire, **caractérisé en ce que** le processeur est configuré pour mettre en œuvre le code lisible par ordinateur pour :

- définir des intervalles de temps (111, 403) pour un utilisateur par extraction (100) d'intervalles de temps en fonction de données historiques de capteurs bruts (101, 401) et personnalisation des intervalles de temps extraits par utilisateur en fonction de données actives (102, 402) saisies par l'utilisateur ou de données déduites des capteurs bruts (101, 401), dans lequel la définition des intervalles de temps (111, 403) comprend la division des intervalles de temps extraits (100) pour obtenir des créneaux de temps et la personnalisation des créneaux de temps par utilisateur en fonction de données actives (402) saisies au moyen d'un questionnaire rempli par l'utilisateur et/ou de données déduites définissant des routines de l'utilisateur en fonction de la localisation et/ou d'activités obtenues par un algorithme d'apprentissage automatique ;
- construire des mots (112) pour chaque intervalle de temps extrait pour l'utilisateur, dans lequel un mot (200, 500, 600, 602) est construit sous forme d'un vecteur comprenant l'intervalle de temps défini d'un créneau de temps actuel personnalisé pour l'utilisateur au sein de l'intervalle de temps extrait et une pluralité de niveaux de caractéristiques en fonction des capteurs, dans lequel la construction de mots (112) pour l'utilisateur comprend le calcul (404) d'une pluralité de caractéristiques en fonction des capteurs pour l'utilisateur sous forme d'agrégations des données brutes de capteurs (101, 401, 421) et l'attribution de la pluralité de niveaux de caractéristiques en fonction des capteurs (405) à la pluralité de caractéristiques en fonction des capteurs calculées, la pluralité de niveaux de caractéristiques en fonction des capteurs (405) étant attribuée en fonction de la valeur de la caractéristique en fonction des capteurs calculée pendant le créneau de temps actuel et la comparaison de ladite valeur avec les valeurs de la caractéristique en fonction des capteurs calculée pour les créneaux de temps correspondants du reste des intervalles de temps extraits personnalisés pour l'utilisateur ;
- construire un document textuel (113) avec les mots construits (200, 500, 600, 602) en fonction des intervalles de temps définis et des niveaux de caractéristiques en fonction des capteurs attribués pour l'utilisateur ;
- extraire des routines (120, 410) pour chaque intervalle de temps défini par extraction des mots les plus fréquents des documents construits à l'aide d'une modélisation de thèmes afin d'obtenir un vecteur de routines ; et
- générer des alertes (130, 420), dans lequel une alerte est déclenchée (428) si un écart est détecté entre les caractéristiques en fonction des capteurs extraites dans le créneau de temps actuel et une routine passée extraite pour un créneau de temps antérieur au créneau de temps actuel, en tenant compte d'une distance calculée (425) entre le vecteur de routine extrait pour le créneau de temps actuel et un vecteur de niveau actuel construit (424) en fonction des niveaux de caractéristiques en fonction des capteurs attribués et des poids calculés (422) à partir de la corrélation entre chaque caractéristique en fonction des capteurs calculée et une caractéristique cible antérieurement définie, en donnant la priorité aux caractéristiques calculées qui sont les plus corrélées à la caractéristique cible.

10. Système selon la revendication 9, comprenant en outre un tableau de bord (300) comprenant une interface utilisateur configurée pour fournir à un utilisateur au moins l'un de : une visualisation (330) des routines extraites, une présentation (310) des alertes générées, des moyens de configuration (340) des intervalles de temps définis, une visualisation (320) de données historiques stockées dans la mémoire.

11. Système selon l'une quelconque des revendications 9 à 10, dans lequel le processeur est en outre configuré pour calculer les caractéristiques en fonction des capteurs sous forme de caractéristiques agrégées extraites de capteurs de téléphones mobiles et de capteurs pouvant être portés sur soi.

12. Système selon l'une quelconque des revendications 9 à 11, dans lequel les caractéristiques en fonction des capteurs sont sélectionnées parmi le pourcentage de temps passé dans une certaine localisation, la batterie consommée par minute, le nombre de pas par minute et le niveau d'éclairage moyen.

13. Système selon l'une quelconque des revendications 9 à 12, dans lequel la modélisation de thèmes est choisie parmi LDA utilisant un sac de mots ou LDA utilisant TF-IDF, LSA, PLSA et lda2Vec.

**FIG. 1**

**FIG. 2**

300

310 340

0

Alerts

Adjust works shift
(time slots)

History Charts

Routine
Visualization

320

330

Personal user/Clinician dasboard

# FIG. 3

**FIG. 4**

Raw Sensor Features Valves

| $t_X$ | 53db | 5k | 0.5 | 10 | 4k | 20 | 3 | 3 | 1 | 10 | ... |

501

502 → Word Construction (based on sensors leveles for each interval)

500

Word constructed

| $t_X$ | H | M | M | L | M | L | H | M | L | M | ... |

Time slot

noise_lvl

steps_sum

radius_gyration

light_level

acceleration_energy

battery_level

time_spent_location_X

no_locations

max_distance

battery_consumed

**FIG. 5**

FIG. 6

EP 3 834 725 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7202791 B2
- US 8606497 B2

- US 2019246968 A1

**Non-patent literature cited in the description**

- Trajectories of depression: unobtrusive monitoring of depressive states by means of smartphone mobility traces analysis. **CANZIAN, L. et al.** Proceedings of the 2015 ACM international joint conference on pervasive and ubiquitous computing. ACM, September 2015, 1293-1304

- **WANG, W. et al.** Sensing behavioral change over time: Using within-person variability features from mobile sensing to predict personality traits. *Proceedings of the ACM on Interactive, Mobile, Wearable and Ubiquitous Technologies*, 2018, vol. 2 (3), 141
- **MONK, T. K. et al.** The Social Rhythm Metric: An instrument to quantify the daily rhythms of life. *Journal of Nervous and Mental Disease*, 1990